# EUROPEAN PATENT SPECIFICATION

(11) **EP 2 268 852 B1**
(45) Date of publication and mention of the grant of the patent: **05.12.2018**
(21) Application number: 09730372.1
(22) Date of filing: 14.04.2009
(51) Int. Cl.: C25C 1/06, C25D 3/20, C22B 7/00, C25D 17/00, C25D 17/12, C23G 1/36, C23F 1/16, C22B 3/44, C22B 3/08, C22B 3/04

(54) **ELECTROCHEMICAL PROCESS FOR THE RECOVERY OF METALLIC IRON AND SULFURIC ACID VALUES FROM IRON-RICH SULFATE WASTES, MINING RESIDUES AND PICKLING LIQUORS**
ELEKTROCHEMISCHES VERFAHREN ZUR RÜCKGEWINNUNG METALLISCHEN EISENS UND SCHWEFELSÄUREWERTE AUS EISENREICHEN SCHWEFELABFÄLLEN, ABBAURESTSTOFFEN UND ALTBEIZLÖSUNGEN
PROCÉDÉ ÉLECTROCHIMIQUE DE RÉCUPÉRATION DE VALEURS DE FER MÉTALLIQUE ET D ACIDE SULFURIQUE À PARTIR DE DÉCHETS SULFATÉS RICHES EN FER, DE RÉSIDUS D EXPLOITATION ET DE LESSIVES DE DÉCAPAGE.

(30) Priority: 11.04.2008 US 44282
(43) Date of publication of application: 05.01.2011
(73) Proprietor: Electrochem Technologies & Materials Inc., Montreal, Québec H1V 2V9 (CA)
(72) Inventor: CARDARELLI, François, Montréal, QC H1V 2V9 (CA)
(74) Representative: Zech, Stefan Markus
(86) International application number: PCT/CA2009/000471
(87) International publication number: WO 2009/124393

(56) References cited:
- WO-A1-2008/034212
- US-A- 2 810 686
- US-A- 4 060 464
- US-A- 4 113 588
- US-A- 5 227 032
- US-B2- 6 860 983

## Description

### FIELD

The present invention relates to an electrochemical process for the recovery of metallic iron, iron rich alloys, oxygen and sulfuric acid values from iron-rich metal sulfate wastes. More specifically, but not exclusively, the present invention relates to an electrochemical process for the recovery of metallic iron, iron rich alloys, oxygen and sulfuric acid from iron-rich metal sulfate wastes such as copperas, iron-rich sulfate liquors, spent sulfuric acid leaching liquors, pickling liquors, or any other iron- rich metal sulfate liquor or solution such as those by-produced in the mining, metallurgical, chemical and titanium dioxide pigment industries.

### BACKGROUND

In the white titanium dioxide pigment manufacture by the sulfate process, a titanium-rich feedstock (e.g., ilmenite, titanium slag) is first dried to a moisture content of less than 0.1 wt.%. The dried raw material is then ground in a ball mill to a mean particle size of about 40 µm. If titanium slag is used, the minute amount of free metallic iron is removed by means of magnetic separation to prevent hazardous hydrogen gas evolution during the subsequent digestion.

A batch digestion step is subsequently performed in which the ground material (e.g., ilmenite, titanium slag, or a blend) is mixed with concentrated sulfuric acid (93-98 wt.% H₂SO₄). The acid number (the mass ratio of sulfuric acid to raw material) is chosen such that the final ratio of H₂SO₄ to TiO₂ in a subsequent hydrolysis step is about 1.8. The reaction is usually started by injecting superheated steam. The initial temperature rises up to about 70°C which is mainly due to the enthalpy of hydratation of the sulfuric acid. The temperature further increases to about 220°C due to the enthalpy released by the sulfatation reaction itself. The mixture is allowed to remain at about 220°C for several hours.

The reaction cake is then dissolved in cold water to avoid premature hydrolysis. If titanium slag is used, the trivalent titanium cations (Ti³⁺) (because of the negative standard electrode potential of the redox couple [*E*⁰_{298.15K}(TiO²⁺/Ti³⁺) = -0.100 V/SHE]) reduce all the ferric iron (Fe³⁺) [*E*⁰_{298.15K}(Fe³⁺/Fe²⁺) = +0.710 V/SHE] according to the redox reaction: Ti³⁺ + Fe³⁺ + H₂O -> TiO²⁺ + Fe²⁺ + 2H⁺. With ilmenite, scrap iron metal (Fe) must be added to reduce all the ferric cations according to the redox reaction: Fe⁰_{(S)} + Fe³⁺ -> 2Fe²⁺.

The solution is then allowed to clarify by settling and filtered using a rotary vacuum filter to remove any undisolved residues. The clarified liquor contains about 200-300 g/L of titanyl sulfate (TiOSO₄) and about 30-50 g/L of total iron when only titanium slag is used. However, up to 120-150 g/L of total iron is present in the solution when ilmenite is used (following the reduction of the ferric cations by the addition of scrap metallic iron). The iron rich solution is cooled to allow for the crystallization of iron (II) sulfate heptahydrate (FeSO₄.7H₂O), called *copperas* or *melanterite* when it is found in nature as a mineral.

The remaining depleted liquor contains about 170-230 g/L TiO₂, 20-30 g/L iron and 20-28 wt.% H₂SO₄. The titanium oxyhydrate is precipitated by hydrolysis at 95-110°C, filtered, washed, dried, doped with pigmentary additives and finally calcined at 800-1100°C to produce the desired white pigment. Following the hydrolysis, the spent liquor contains about 20 wt.% H₂SO₄ and about 20-30 g/L iron.

When ilmenite is used as feedstock, significant amounts of copperas and iron-rich sulfate liquors are generated as by-products. These by-products may mostly comprise ferrous sulfate and spent sulfuric acid or a combination thereof. The actual by-products are in fact more complex as these consist of a waste which is essentially made of the above salts contaminated with other metal sulfates if washing of the copperas crystals is not complete.

Commercialization of copperas as a flocculating agent in the treatment of wastewater or as an additive in cement to prevent the hazards related to hexavalent chromium is hampered by the important volume of the product compared to its iron content and its low market value. Therefore, harvesting iron as a metal and recovering sulfuric acid from the sulfate wastes greatly reduces the management of wastes and its associated costs.

Until now, except for dialysis and solvent extraction that were used to recover the spent sulfuric acid from pickling liquors, no electrochemical process has been used to recover both metallic iron and sulfuric acid from wastes by-produced in the titanium dioxide pigment industry.

It appears from the prior art that extensive work has been done since the second half of the eighteenth century on the electrodeposition of iron metal from iron-containing solutions. In fact, various processes for electroplating or electrorefining iron metal are known. Usually, the aim of these processes is to prepare an electrolytic iron metal of high purity and to a lesser extent pure iron metal powders. Usually, the most common electrolytes were based on iron (II) chloride [1] and on iron (II) sulfate [2] or a mixture of both.

Most of these known electrochemical processes were originally designed to electrodeposit iron metal at the cathode while the anodic reaction usually
consisted in the anodic dissolution of a soluble anode made of impure iron, pig iron, mild steel in bulk form or in pieces or turnings contained in a bag made of glass cloth, or synthetic fabrics such as Orion® and Dynel® in order to retain the insoluble sludge. In such processes, the use of consumable-type anodes ensured a continuous supply of ferrous cations to the bath and avoided undesirable anodic reactions such as the evolution of corrosive nascent oxygen that normally occurs in sulfate electrolytes [3, 4].

None of these processes provided for the efficient simultaneous recovery of iron and sulfuric acid from iron-rich metal sulfate solutions. The only attempt to recover iron metal electrolytically from an iron-bearing sulfate solution was the Pyror process, which has been reviewed recently [5]. In this process, the iron-rich sulfate liquor was electrolyzed in a two compartment electrolyzer comprising steel cathodes, lead anodes and diaphragms made of various fabric materials. Owing to the low concentration of ferrous iron (25 g/L Fe) in the catholyte, sodium sulfate decahydrate was added as a supporting electrolyte to reach a final concentration of about 90-100 g/L Na₂SO₄. The anolyte was composed of 55-60 g/L sulfuric acid, 55-65 g/L sodium sulfate and 25 g/L ferric iron. The electrolysis was performed at a temperature ranging from 70°C to 8O°C under a low current density of 250 A/m², with an overall cell voltage of 3.75V and a cathodic current efficiency of 85%.

The major limitations of this process are the following: (1) a low space time yield of 0.260 kg.m⁻²h⁻¹ because of the low current density; (2) the impossibility of recovering pure sulfuric acid from the anolyte because of the presence of sodium sulfate which has to be removed and the contamination by ferric iron, lead, antimony and tin; and (3) the high specific energy consumption of 4.25 kWh/kg for the iron metal due to the elevated cell voltage reported.

In view of the strict specifications regarding the impurity content of sulfuric acid, the above drawbacks have prevented the use of such a process for the recovery of iron and sulfuric acid values from iron-rich sulfate wastes by-produced during the manufacture of titanium dioxide pigment. The only alternative to electrolysis has been the recovery of sulfuric acid and iron by means of solvent extraction [6]. However, up to the present time, such a process has never reached a commercially useful scale because of the prohibitive cost of the organic solvents involved.

There remains a need for an efficient and economical process for recovering both iron metal and sulfuric acid values from iron-rich metal sulfate wastes, especially those by-produced in the titanium pigment industry.

US 2,810,686 describes an electrolytic process for the regeneration of spent iron pickle liquor of commerce containing dissolved ferrous sulfate and sulfuric acid which comprises passing a direct electric current through an electrolysis cell which is divided by means of an anionic permselective diaphragm into an anode compartment and a cathode compartment. Said anode compartment contains an anode and an aqueous anolyte comprising sulfuric acid, while said cathode compartment contains a cathode and spent iron pickle liquor as the catholyte.

US 5,227,032 discloses methods for producing oxygen from metal oxides bearing minerals, e.g. ilmenite. The process includes producing a slurry of the minerals and hot sulfuric acid, the acid and minerals reacting to form sulfates of the metal, adding water to the slurry to dissolve the minerals into an aqueous solution, separating the first aqueous solution from unreacted minerals from the slurry, and electrolyzing the aqueous solution to produce the metal and oxygen. Further is described therein a process for producing a slurry with ferrous sulfate therein by reacting ilmenite and hot sulfuric acid, adding water to the slurry to dissolve the ferrous sulfate into an aqueous solution, separating the aqueous solution from the slurry, and electrolyzing the aqueous solution to produce iron and oxygen.

US 4,113,588 describes a process for recovery of waste H₂SO₄ and HCl which are used for pickling metallic materials and articles and contain large quantities of Fe ions. Further, is disclosed a process for the recovery of H₂SO₄ and HCl from waste H₂SO₄ which contains large amounts of Fe ions after removal of Ti ions by a hydrolysis process in the production of TiO₂ and also for the recovery of high-purity electrolytic iron or iron hydroxide.

### SUMMARY

The present invention broadly relates to an electrochemical process for the recovery of metallic iron or an iron-rich alloy, oxygen and sulfuric acid from iron-rich metal sulfate wastes.

As broadly claimed, the present invention relates to an electrochemical process for the recovery of metallic iron or an iron-rich alloy, oxygen and sulfuric acid from an iron-rich metal sulfate solution, the process comprising:
providing an iron-rich metal sulfate solution;
electrolysing the iron-rich metal sulfate solution in an electrolyser comprising a cathodic compartment equipped with a cathode having a hydrogen over-potential equal or higher than that of iron and containing a catholyte having a pH ranging from 2 to 6; an anodic compartment equipped with an anode and containing an anolyte; and a separator allowing for anion passage; and
recovering electrodeposited iron or iron-rich alloy, sulfuric acid and oxygen gas;
wherein electrolyzing the iron-rich metal sulfate solution causes iron or iron-rich alloy to be electrodeposited at the cathode, nascent oxygen gas to evolve at the anode, sulfuric acid to accumulate in the anodic compartment and an iron depleted solution to be produced.

In an embodiment of the present invention, the step of providing an iron rich metal sulfate solution comprises leaching an iron rich feedstock, In a further embodiment of the present invention, the step of providing an iron rich metal sulfate solution comprises dissolving copperas into acidified water. In yet a further embodiment of the present invention, the iron-rich feedstock is selected from the group consisting of copperas and iron sulfates by-produced during the manufacture of titanium dioxide pigment, iron-rich mining residues such as by produced in the manufacture of synthetic rutiles and iron ores. In yet a further embodiment of the present invention, the iron-rich metal sulfate solution is obtained either by leaching or dissolving iron ores and concentrates in spent sulfuric acid or spent pickling liquors that contain free sulfuric acid. Non-limiting examples of iron ores and concentrates comprise oxides, carbonates and sulfides.

In an embodiment of the present invention, the pH of the catholyte is adjusted to a pH ranging from 2 to 4.

In an embodiment of the present invention, the cathode has an overvoltage for the discharge of the hydrogen cation at 200 A.m⁻² of greater than about 466 mV in 0.5 mol.dm⁻³ H₂SO₄ solution at 25°C and an overvoltage for the discharge of the hydrogen cation at 1000 A.m⁻² of greater than about 800 mV in 1.0 mol.dm⁻³ H₂SO₄ solution at 25°C.

In an embodiment of the present invention, the cathode comprises a material or is coated with a material selected from the group consisting of nickel, nickel alloy, iron, iron alloy, titanium, titanium alloy, zirconium, zirconium alloy, zinc, zinc alloy, cadmium, cadmium alloy, tin, tin alloy, copper, copper alloy, lead, lead alloy, niobium, niobium alloy, gold, gold alloy, mercury and a metallic amalgam including mercury.

In an embodiment of the present invention, the electrolyzing step is performed in a two-compartment electrolyser comprising an ion exchange membrane separating the anodic compartment from the cathodic compartment.

In an embodiment of the present invention, the electrolyzing step is performed in a three-compartment electrolyser comprising a central compartment disposed between the anodic compartment and the cathodic compartment and wherein an ion exchange membrane separates the anodic and cathodic compartments from the central compartment.

The foregoing and other objects advantages and features of the present invention will become more apparent upon reading of the following non-restrictive description of specific embodiments thereof, given by way of example only with reference to the accompanying drawings,

### BRIEF DESCRIPTION OF THE DRAWINGS

In the appended drawings:
**Figure 1** is a flow-sheet diagram illustrating the various steps of the electrochemical process according to a first embodiment of the present invention, based on a two-compartment electrolyser and performing the electrolysis with a pH-adjusted iron-rich metal sulfate solution.
**Figure 2** is a flow-sheet diagram illustrating the various steps of the electrochemical process according to a second embodiment of the present invention, based on a three-compartment electrolyser and performing the electrolysis with a pH-adjusted iron-rich metal sulfate solution.
**Figure 3** is a schematic illustration of a two-compartment electrolyser used in some embodiments of the present invention illustrating the electrochemical reactions occurring at the electrodes.
**Figure 4** is a schematic illustration of a three-compartment electrolyser used in some embodiments of the present invention illustrating the electrochemical reactions occurring at the electrodes.
**Figure 5** is a schematic illustration of a two-compartment electrolyser in accordance with a further embodiment of the present invention.

### DESCRIPTION

In order to provide a clear and consistent understanding of the terms used in the present specification, a number of definitions are provided below. Moreover, unless defined otherwise, all technical and scientific terms as used herein have the same meaning as commonly understood to one of ordinary skill in the art to which this invention pertains.

The use of the word "a" or "an" when used in conjunction with the term "comprising" in the claims and/or the specification may mean "one", but it is also consistent with the meaning of "one or more", "at least one", and "one or more than one". Similarly, the word "another" may mean at least a second or more.

As used in this specification and claim(s), the words "comprising" (and any form of comprising, such as "comprise" and "comprises"), "having" (and any form of having, such as "have" and "has"), "including" (and any form of including, such as "include" and "includes") or "containing" (and any form of containing, such as "contain" and "contains"), are inclusive or open-ended and do not exclude additional, unrecited elements or process steps.

The term "about" is used to indicate that a value includes an inherent variation of error for the device or the method being employed to determine the value.

Various iron-rich feedstocks may be used in the process of the present invention, including, but not limited to, iron-rich sulfate wastes, for example from the digestion in sulfuric acid of titaniferous ores, spent acid leaching liquors, pickling liquors or any other iron-rich metal sulfate liquor or solution. The feedstock may be solid, anhydrous, in slurry form or in solution. In an embodiment of the present invention, the iron-rich feedstock is selected from the group consisting of copperas and iron sulfates by-produced during the manufacture of titanium dioxide pigment, iron-rich mining residues such as by produced in the manufacture of synthetic rutiles and iron ores. Non-limiting examples of iron ores comprise oxides, carbonates and sulfides. In yet a further embodiment of the present invention, the iron-rich metal sulfate solution is obtained by dissolution of copperas and/or iron sulfates into process water or into iron- rich spent pickling solutions. In yet a further embodiment of the present invention, the iron-rich metal sulfate solutions is obtained from mixtures of iron-rich spent pickling solutions and spent sulfuric acid solutions originating from various industrial processes. In yet a further embodiment of the present invention, the iron-rich metal sulfate solutions are obtained by iron metal and alloy scraps dissolved in spent sulfuric acid or spent pickling liquors that contain free sulfuric acid. In yet a further embodiment of the present invention, the iron-rich metal sulfate solutions are obtained either by leaching or dissolving iron ores or concentrates such as iron oxides, iron carbonates and iron sulfides in spent sulfuric acid or spent pickling liquors that contain free sulfuric acid.

As used herein, the term "electrolyser" generally designates a two-compartment or three-compartment electrolyser. The electrolysers used in the process of the present invention comprise an anodic compartment and a cathodic compartment, separated by an ion exchange membrane.

As used herein, when referring to an electrolyser, the term "non-anodic compartment" designates the cathodic compartment of a two-compartment electrolyser and/or the central compartment of a three-compartment electrolyser. For more clarity, it does not designate the cathodic compartment of a three-compartment electrolyser.

As used herein, the term over-potential (also known as over-voltage) generally designates, according to the definition given by Gerischer, the difference between the electrical potential of an electrode under the passage of current and the thermodynamic value of the electrode potential in the absence of electrolysis for the same experimental conditions.

As used herein, when referring to a cathode, the term "hydrogen over-potential" designates an over-potential associated with the discharge of hydrogen cations at the cathode, liberating nascent hydrogen gas. A cathode having high hydrogen over-potential minimizes hydrogen evolution during electrolysis, and thus facilitates the electrodeposition of iron. Known and non-limiting examples of materials having high hydrogen over-potential are given, for example, in Cardarelli [7]. Advantageously, the cathode material also allows stripping of the iron metal deposit. Non limiting examples of suitable cathode materials include iron, steels, nickel, nickel alloy, titanium (of commercial or higher purity), titanium alloy (for example titanium palladium ASTM grade 7), zirconium (of commercial or higher purity), zirconium alloy, zinc (of commercial or higher purity), zinc alloy, cadmium (of commercial or higher purity), cadmium alloy, tin (of commercial or higher purity), tin alloy, copper (of commercial or higher purity), copper alloy, lead (of commercial or higher purity), lead alloy, niobium (of commercial or higher purity), niobium alloy, gold (of commercial or higher purity), gold alloy, mercury or metallic amalgam with mercury. It is to be understood that a cathode having high hydrogen over-potential may consist of a bulk of a material having high hydrogen over-potential or may simply be coated with such a material.

As used herein, when qualifying a cathode, the expression "having a hydrogen over-potential equal or higher than that of iron" means that, in absolute value, the cathode has an over-voltage at 200 A.m⁻² greater than about 466 mV in 0.5 mol.dm⁻³ H₂SO₄ at 25°C and at 1000 A.m⁻² greater than about 800 mV in 1.0 mol.dm⁻³ H₂SO₄ at 25°C.

In an embodiment, wherein the feedstock is in solid and/or anhydrous form, the process of the present invention generally consists in first leaching or dissolving the feedstock, such as copperas (FeSO₄·7H₂O) by-produced during the digestion in sulfuric acid of titania-rich feedstocks (e.g., ilmenite, titanium slag) with either one of: a) hot acidic process water; b) hot diluted sulfuric acid; c) hot spent iron rich liquors coming from the high pressure leaching with sulfuric acid of reduced and/or metallized titanium feedstocks such in the processes used to produce synthetic rutiles (e.g., Becher, Benelite) or from the high pressure leaching with sulfuric acid of titanium slags or even from spent liquors by-produced during the pickling of steels. After complete dissolution, the pH is adjusted by adding, for instance, but not restricted to iron (II) carbonate, the liquor is filtered to separate the remaining insoluble solids, mostly ferric hydroxide, Fe(OH)₃.

In another embodiment, wherein the feedstock is already in the form of a slurry, the leaching may help dissolve any soluble iron sulfates before solid-liquid separation. The solid separation step is typically performed by a physical separation method, non-limiting examples of which include decantation, filtration or centrifugation. In an embodiment of the present invention, the solid-liquid separation is performed by means of filtration.

In still another embodiment, wherein the feedstock is in a clear aqueous liquid form, *i.e*. that of an iron-rich metal sulfate solution, the leaching or dissolving steps, or the acid-leaching of reduced and/or metallized titanium feedstocks such as in the processes used to produce synthetic rutiles, are of no particular interest.

Two main process variants can be used for recovering sulfuric acid, oxygen and metal values from the iron-rich metal sulfate solution, based on the same general principle of simultaneous recovery of metallic iron and sulfuric acid values from an iron-rich metal sulfate solution by electrolysis, using a catholyte adjusted to a pH ranging from 2 to 6 and a cathode having a hydrogen over-potential equal or higher than that of iron.

In an embodiment of the present invention, the cathode is etched prior to beginning the electrolysis. In a further embodiment of the present invention, the cathode is etched using an oxalic acid solution (10 wt.%). In yet a further embodiment of the present invention the cathode is etched using a fluoro-nitric acid mixture. In yet a further embodiment of the present invention, the fluoro-nitric acid mixture comprises about 70 vol% cone. HNO₃, about 20 vol.% conc. HF and about 10 vol.% H₂O. Other etching solutions are known in the art, and are within the capacity of a skilled technician.

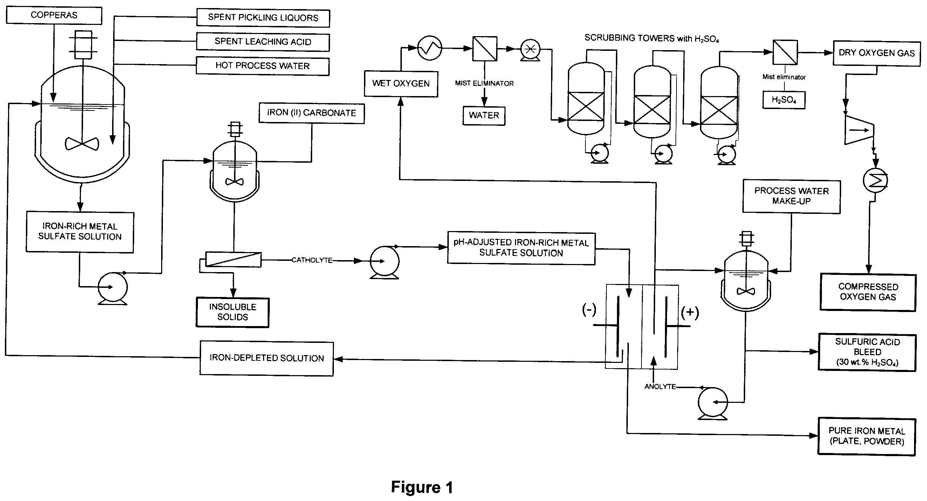

In a particular embodiment of the process of the present invention, as illustrated in **Figure 1**, the pH of the iron-rich metal sulfate solution is first adjusted from 2 to 6, with alkaline reagents such as, but not limited to, iron (II) carbonate or ammonium hydroxide or a mixture thereof, after which the solution is ready for electrolysis.

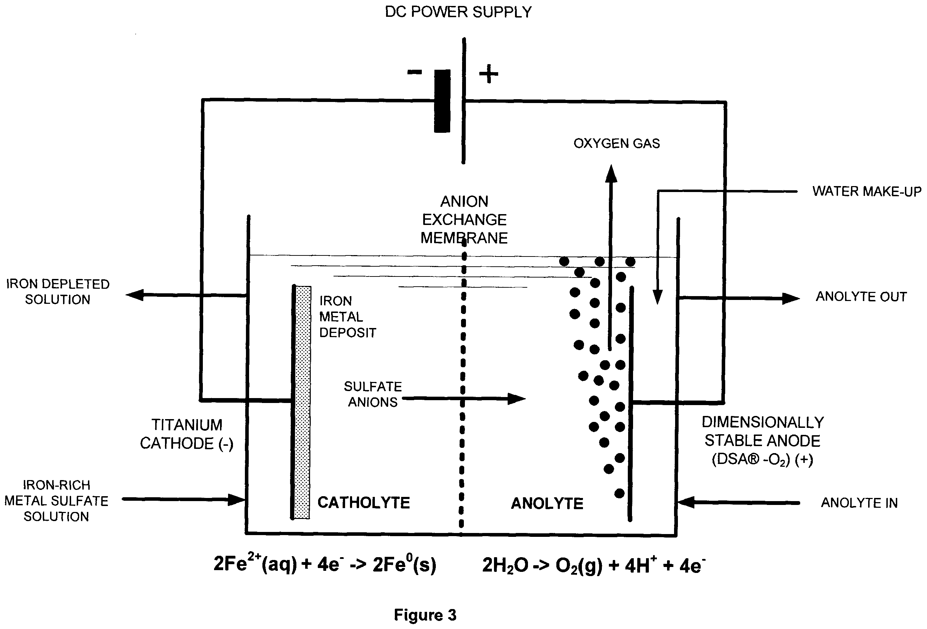

Still with reference to **Figure 1**, the electrolytic stage consists in circulating the pH-adjusted iron-rich metal sulfate solution inside the cathodic compartment of an electrolyser. The iron-rich metal sulfate solution thus acts as a catholyte. In an embodiment, the electrolyser comprises two compartments separated by an anion-exchange membrane (as illustrated in **Figure 3**). The cathodic compartment comprises a cathode made of nickel, nickel alloy, iron, steel, titanium or a titanium alloy (usually ASTM grade 7), while the anodic compartment has a dimensionally stable anode with an iridium dioxide coating for promoting the evolution of oxygen (DSA™-O₂) for instance Ti-Pd/IrO₂ or preferably Ta/IrO₂. In an embodiment of the present invention, the anolyte that circulates in a loop within the anodic compartment comprises a mixture of about 30 wt.% sulfuric acid. It was observed that at this concentration the anolyte exhibits excellent ionic conductivity at several temperatures (e.g., 83 S/m at 25°C and 101 S/m at 50°C).

During electrolysis at the above-mentioned pH ranging from 2 to 6, iron metal deposits at the cathode. Sulfate anions migrate through the permeable anion exchange membrane towards the anodic compartment, where water is oxidized to yield nascent oxygen gas at the surface of the anode and leaving behind hydronium cations that increase the acidity of the anodic compartment according to the following electrochemical reactions:

2Fe²⁺(aq) + 4e⁻ → 2Fe⁰(s) (cathode, -)

2H₂O → O₂(g) + 4H⁺ + 4e⁻ (anode, +)

The overall reaction therefore being the production of iron metal at the cathode, and oxygen gas and sulfuric acid being produced in the anodic compartment:

2FeSO₄ + 2H₂O → 2Fe(s) + 2H₂SO₄ + O₂(g)

Side-reactions may also occur:
(1) At the anode, the oxidation of sulfate anions forming persulfate anions [*e.g*., peroxomonosulfate (SO₅²⁻) and peroxodisulfate (S₂O₈²⁻) anions] which yield at high current densities and low temperature, under the acidic process conditions encountered in the anodic compartment, a needle-like precipitate of two highly unstable persulfuric acids [*e.g*., peroxomonosulfuric acid or Caro's acid (H₂SO₅) and peroxodisulfuric acid or Marshall acid (H₂S₂O₈)]:

   2SO₄²⁻(aq) → S₂O₈²⁻(aq) + 2e⁻;

   SO₄²⁻(aq) + H₂O → SO₅²⁻(aq) + 2H⁺ + 2e⁻
(2) At the cathode, the evolution of hydrogen gas:

   2H⁺(aq) + 2e⁻ → H₂(g);

   along with the reduction of traces of ferric cations present in the catholyte:

   Fe³⁺(aq) + e⁻ → Fe²⁺(aq).

On the cathode side, these undesired side reactions are minimized by maintaining the pH of the catholyte in the range from 2 to 6 and by using a cathode material having a high over-potential for the discharge of hydrogen cations so as to prevent hydrogen evolution. In an embodiment, the cathode materials used in the process of the present invention have a hydrogen over-potential equal to or higher (in absolute value) than that of pure iron in given electrolysis conditions. In an embodiment of the present invention, the pH of the catholyte is maintained between 2 and 6. In yet a further embodiment of the present invention, the pH of the catholyte is maintained between 2 and 4. Therefore, the precipitation of ferric hydroxide that occurs can be continuously removed by filtration. Only traces of ferric cations remain in solution, in equilibrium with the insoluble hydroxide. In addition, using an inert atmosphere (*e*.*g*. nitrogen) above the cathodic compartment may help in preventing the oxidation of the ferrous cations.

On the anode side, maintaining a temperature above room temperature and limiting the anodic current density impedes the formation of persulfuric acids, thereby ensuring the safe operation and production of a high purity sulfuric acid.

In an embodiment of the present invention, the electrolysis is conducted at a temperature ranging between about 20°C to about 80°C under galvanostatic control. The overall current density is comprised between about 200 to about 10,000 A/m² with a cell voltage ranging from about 1.5 to about 5.0 V per cell. In this specific embodiment, the faradaic efficiency is usually greater than about 90% and the average specific energy consumption ranges between about 1.60 to about 5.33 kWh per kg of iron.

The oxygen gas evolved is released to the atmosphere or it is recovered by conventional methods. For example, as shown in **Figure 1****,** it may be recovered by suction, eventually cooled by passing it through a heat exchanger, and dried by passing it through a mist eliminator and several concentrated sulfuric acid spray-towers (scrubbing). Finally the dry and cold oxygen gas may be compressed, thus being ready to be transported or stored on-site for future use.

In the embodiment where plates of electrodeposited iron metal are produced, the electrodeposits are mechanically stripped from the cathode(s) (*e.g.* titanium, nickel or steel cathodes) at the end of the electrolysis. The iron metal plate is thoroughly rinsed with slightly acidic water to remove traces of catholyte and are eventually passivated with nitric acid, rinsed with deionized water and dried under a nitrogen atmosphere.

In the embodiment where pure iron metal chips are electrodeposited onto a rotating mandrel, they can be mechanically continuously removed from the poorly adhering titanium, nickel or steel drum cathodes by means of a scraper. The harvested iron metal chips are thoroughly rinsed with slightly acidic water to remove traces of catholyte and are eventually passivated with nitric acid, rinsed with deionized water and dried under a nitrogen atmosphere. A comminution treatment can subsequently be performed to obtain fine iron metal powder.

In the embodiment where fine iron powder is produced, it can be mechanically continuously removed from the poorly adhering titanium, nickel or steel cathodes by the intense circulation of catholyte and harvested using one or more hydrocyclone(s) in series and/or using permanent magnets installed at the underflow of the hydrocyclones. The harvested iron metal powder is thoroughly rinsed with slightly acidic water to remove traces of catholyte and is eventually passivated with nitric acid, rinsed with deionized water and dried under a nitrogen atmosphere.

In an embodiment of the present invention, an iron-rich alloy, in the form of a plate, chips or powder is produced. The alloy typically comprises reducible metallic elements that were co-deposited with the iron metal. Non-limiting examples of such reducible metals include Ni, Co, Cu, Cd, Sn, Mn, Cr or V. Other reducible elements are known in the art, and are within the capacity of a skilled technician.

In an embodiment of the present invention, salts, non-limiting examples of which include lithium, sodium, potassium and ammonium sulfates are added to the catholyte in order to increase the electrical conductivity thereof.

During the electrolysis, sulfate anions migrate through the anion exchange membrane towards the anode where the oxidation of water yields nascent oxygen gas and leaves behind hydronium cations in the anodic compartment of the electrolyzer. Therefore, the concentration of sulfuric acid in the anolyte increases continuously over time. When the acid concentration reaches a predetermined threshold value, pure water is added to the system in order to re-establish the original anolyte acid concentration. The addition of water increases the total volume of the anolyte. A bleed is thus performed in the anolyte circuit loop following the water addition.

In practice, the maximum threshold concentration of sulfuric acid is established based on the following experimental observation: at a given operating temperature, the conductivity of the sulfuric acid first increases with concentration then reaches a maximum and then decreases again. The highest concentration of acid, at which the ionic conductivity again equals the conductivity of the original acid concentration, is used as the upper threshold limit. For instance, at 50°C, starting with 30 wt.% sulfuric acid having a conductivity of 108.9 S/m, the conductivity increases up to 109.75 S/m for a concentration of 33 wt.% and then decreases down to 108.75 S/m for 36 wt.% H₂SO₄ while at 60°C. Therefore, 36 wt.% H₂SO₄ can be selected as the cut-off value. Once the cut-off value is reached, water is added until the acid concentration, as measured by means of a hydrometer, once again reaches 30 wt.%. The excess volume of sulfuric acid at 30 wt.% is removed and recycled back to the process (*e*.*g*., pickling, acid-pressure leaching), or its concentration can be further increased by usual techniques used to concentrate sulfuric acid, such as for instance but not restricted to, evaporation, evaporation under reduced pressure or vacuum, mechanical vapor recompression (MVR), reverse osmosis, dialysis, etc.

In an embodiment of the present invention, following the electrolysis, the depleted iron solution is replenished by adding copperas in order to bring the total iron concentration to a suitable level and then recirculated into the cathodic compartment of the electrolyzer.

It is to be understood that changing the pH of the catholyte in the process of **Figure 1****,** for example from 2.5 to 3.5 by adding iron (II) carbonate, would allow any unwanted ferric cations to precipitate as insoluble ferric hydroxide, Fe(OH)₃, forming a sludge that can be easily continuously removed by filtration.

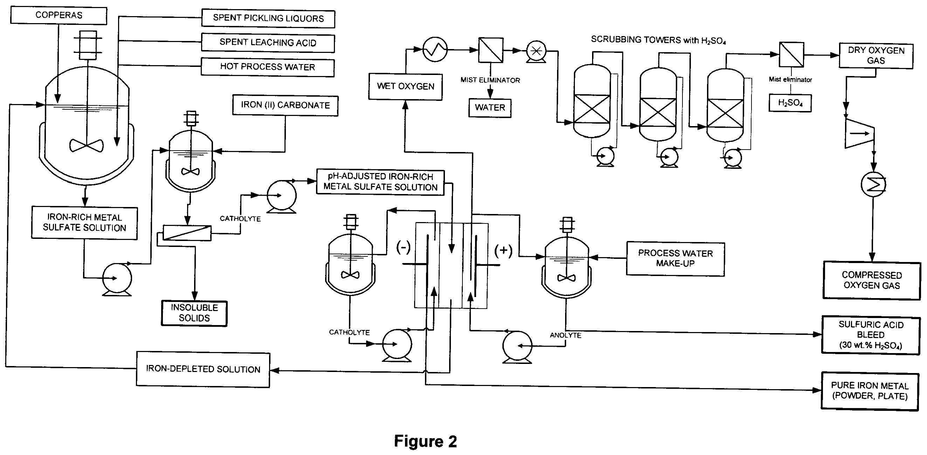

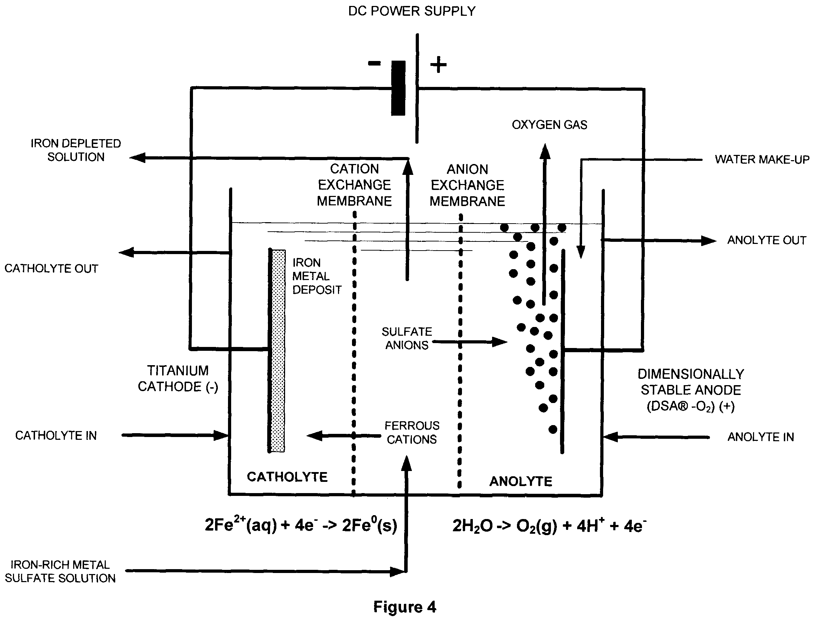

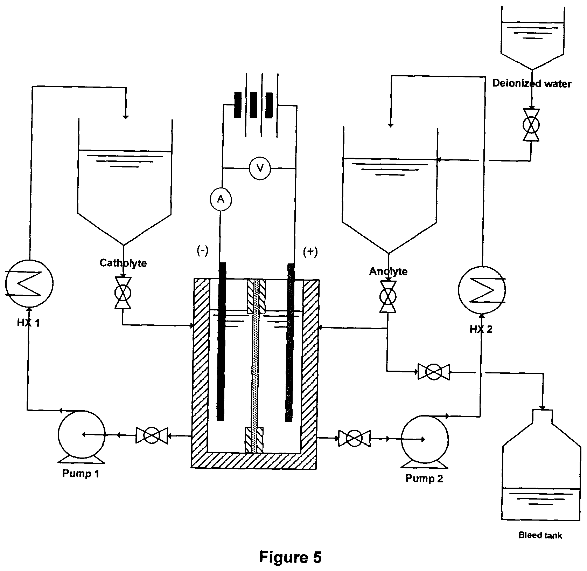

In an embodiment of the process of the present invention, as illustrated in **Figure 2****,** the iron-rich metal sulfate solution is sent without any prior treatment (such as pH adjustment) to the electrochemical plant. The electrolyser design used in this process (as illustrated in **Figure 4**) comprises three compartments: (i) a cathodic compartment comprising a cathode; (ii) an anodic compartment comprising a dimensionally stable anode for the evolution of oxygen; and (iii) a central compartment separated from the cathodic compartment by a cation-exchange membrane and from the anodic compartment by an anion exchange membrane. In an embodiment, the cathodic compartment comprises an iron, steel, nickel or titanium plate cathode. The catholyte circulating within the cathodic compartment comprises a saturated solution of ferrous sulfate (about 600 g/L FeSO₄·7H₂O), while the anolyte comprises about 30 wt.% sulfuric acid. The pH of the catholyte is maintained between 2 and 6. In yet a further embodiment of the present invention, the pH of the catholyte is maintained between 2 and 4.0. In yet a further embodiment of the present invention, the pH of the catholyte is maintained between 2.5 and 3.5. The iron-rich metal sulfate solution is continuously passed through the central compartment. During the electrolysis (**Figure 5**), ferrous cations of the iron-rich metal sulfate solution migrate through the cation exchange membrane and are reduced to pure iron metal on the nickel, iron or titanium cathode while the sulfate anions migrate through the anion exchange membrane towards the dimensionally stable anode where water is oxidized, thereby producing nascent oxygen gas, leaving behind hydronium cations that combine with the incoming sulfate anions forming additional sulfuric acid. The electrochemical reactions involved are as follows:

2Fe²⁺(aq) + 4e⁻ → 2Fe⁰(s) (cathode, -)

2H₂O → O₂(g) + 4H⁺ + 4e⁻ (anode, +)

The overall reaction therefore being the production of iron metal at the cathode, and oxygen and sulfuric acid in the anodic compartment:

2FeSO₄ + 2H₂O → 2Fe(s) + 2H₂SO₄ + O₂(g)

Side-reactions may also occur.
(1) At the anode, the oxidation of sulfate anions forming persulfate anions [*e.g.,* peroxomonosulfate (SO₅²⁻) and peroxodi sulfate (S₂O₈²⁻) anions] which yield at high current densities and low temperature, under the acidic process conditions encountered in the anodic compartment, a needle-like precipitate of two highly unstable persulfuric acids [*e*.*g*., peroxomonosulfuric acid or Caro's acid (H₂SO₅) and peroxodisulfuric acid or Marshall acid (H₂S₂O₈)]:

   2SO₄²⁻(aq) → S₂O₈²⁻(aq) + 2e⁻;

   SO₄²⁻(aq) + H₂O → SO₅²⁻(aq) + 2H⁺ + 2e⁻
(2) At the cathode, the evolution of hydrogen gas:

   2H⁺(aq) + 2e⁻ → H₂(g);

   along with the reduction of traces of ferric cations present in the catholyte:

   Fe³⁺(aq) + e⁻ → Fe²⁺(aq).

On the cathode side, these undesired side reactions are minimized by maintaining the pH of the catholyte in the range from 2 to 6and by using a cathode material having a high over-potential for the discharge of hydrogen cations so as to prevent hydrogen evolution. In an embodiment, the cathode materials used in the process of the present invention have a hydrogen over-potential equal to or higher (in absolute value) than that of iron in given electrolysis conditions. In an embodiment of the present invention, the pH of the catholyte is maintained between 2 and 6. In yet a further embodiment of the present invention, the pH of the catholyte is maintained between 2 and 4. Therefore, the precipitation of ferric hydroxide that occurs can be continuously removed by filtration. Only traces of ferric cations remain in solution, in equilibrium with the insoluble hydroxide. In addition, using an inert atmosphere (*e.g.* nitrogen) above the cathodic compartment may help in preventing the oxidation of the ferrous cations.

On the anode side, maintaining a temperature above room temperature and limiting the anodic current density impedes the formation of persulfuric acids, thereby ensuring the safe operation and production of a high purity sulfuric acid.

In an embodiment of the present invention, the electrolysis is conducted at a temperature ranging between about 20°C to about 80°C under galvanostatic control. The overall current density is comprised between about 200 to about 10,000 A/m² with a cell voltage ranging from about 1.5 to about 5.0 V per cell. In this specific embodiment, the faradaic efficiency is usually greater than about 90% and the average specific energy consumption is between about 1.60 to about 5.33 kWh per kg of iron.

The oxygen gas evolved is released to the atmosphere or it is recovered by conventional methods. For example, as shown in **Figure 2****,** it may be recovered by suction, eventually cooled by passing it through a heat exchanger, and dried by passing it through a mist eliminator and several concentrated sulfuric acid spray-towers (scrubbing). Finally the dry and cold oxygen gas may be compressed, thus being ready to be transported or stored on-site for future use.

In the embodiment where plates of electrodeposited iron metal are produced, they plates mechanically stripped from the cathode(s) (*e*.*g*. titanium, nickel or steel cathodes) at the end of the electrolysis. The iron metal plate is thoroughly rinsed with slightly acidic water to remove traces of catholyte and are eventually passivated with nitric acid, rinsed with deionized water and dried under a nitrogen atmosphere.

In the embodiment where pure iron metal chips are electrodeposited onto a rotating mandrel, they can be mechanically continuously removed from the poorly adhering titanium, nickel or steel drum cathodes by means of a scraper. The harvested iron metal chips are thoroughly rinsed with slightly acidic water to remove traces of catholyte and are eventually passivated with nitric acid, rinsed with deionized water and dried under a nitrogen atmosphere. A comminution treatment can subsequently be performed to obtain fine iron metal powder.

In an embodiment of the present invention, an iron-rich alloy, in the form of a plate, chips or powder is produced. The alloy typically comprises reducible metallic elements that were co-deposited with the iron metal. Non-limiting examples of such reducible metals include Ni, Co, Cu, Cd, Sn, Mn, Cr or V. Other reducible elements are known in the art, and are within the capacity of a skilled technician.

In an embodiment of the present invention, salts, non-limiting examples of which include lithium, sodium, potassium and ammonium sulfates are added to the catholyte in order to increase the electrical conductivity thereof.

In the embodiment where fine iron powder is produced, it can be mechanically continuously removed from the poorly adhering titanium, nickel or steel cathodes by the intense circulation of catholyte and harvested using one or more hydrocyctone(s) in series and/or using permanent magnets installed at the underflow of the hydrocyclones. The harvested iron metal powder is thoroughly rinsed with slightly acidic water to remove traces of catholyte and is eventually passivated with nitric acid, rinsed with deionized water and dried under a nitrogen atmosphere.

During the electrolysis, sulfate anions migrate through the anion exchange membrane towards the anode where the oxidation of water yields nascent oxygen gas and leaves behind hydronium cations in the anodic compartment of the electrolyzer. Therefore, the concentration of sulfuric acid in the anolyte increases continuously over time. When the acid concentration reaches a predetermined threshold value, pure water is added to the system in order to re-establish the original concentration of sulfuric acid in the anolyte. The addition of water increases the total volume of the anolyte. A bleed is thus performed in the anolyte circuit loop following the water addition.

In practice, the maximum threshold concentration of sulfuric acid is established based on the following experimental observation: at a given operating temperature, the conductivity of the sulfuric acid first increases with concentration then reaches a maximum and then decreases again. The highest concentration of acid, at which the ionic conductivity again equals the conductivity of the original acid concentration, is used as the upper threshold limit. For instance, at 50°C, starting with 30 wt.% sulfuric acid having a conductivity of 108.9 S/m, the conductivity increases up to 109.75 S/m for a concentration of 33 wt.% and then decreases down to 108.75 S/m for 36 wt.% H₂SO₄ while at 60°C. Therefore, 36 wt.% H₂SO₄ can be selected as the cut-off value. Once the cut-off value is reached, water is added until the acid concentration, as measured by means of a hydrometer, once again reaches 30 wt.%. The excess volume of sulfuric acid at 30 wt.% is then removed and recycled back to the process (*e*.*g*., pickling, acid-pressure leaching), or its concentration can be further increased by usual techniques used to concentrate sulfuric acid, such as for instance but not restricted to, evaporation, evaporation under reduced pressure or vacuum, mechanical vapor recompression (MVR), reverse osmosis, dialysis, etc.

In an embodiment of the present invention, the central compartment is continuously replenished by the addition of iron-rich metal sulfate solution. It is to be noted that the pH of the iron-rich metal sulfate solution passing through the central compartment may or may not be adjusted prior to the electrolysis when using a three-compartment electrolyser. In yet a further embodiment, the central compartment may optionally be further replenished by adding copperas or any other suitable iron rich feedstock (**Figure 2**).

A number of parameters of the process of the present invention may be varied, as explained below.

Cathode materials suitable for use in the process of the present invention (used as bulk or as coating materials) are materials having a high hydrogen over-potential minimizing the evolution of hydrogen gas. In an embodiment of the present invention, the cathode materials have a hydrogen over-potential equal or higher than that of pure iron under a given set of electrolysis conditions. Advantageously, the cathode material also allows stripping (e.g. mechanical stripping) of the iron metal deposit. Non limiting examples of suitable cathode materials include iron, steels, nickel, nickel alloy, titanium (of commercial or higher purity), titanium alloy (for example titanium palladium ASTM grade 7), zirconium (of commercial or higher purity), zirconium alloy, zinc (of commercial or higher purity), zinc alloy, cadmium (of commercial or higher purity), cadmium alloy, tin (of commercial or higher purity), tin alloy, copper (of commercial or higher purity), copper alloy, lead (of commercial or higher purity), lead alloy, niobium (of commercial or higher purity), niobium alloy, gold (of commercial or higher purity), gold alloy, mercury or metallic amalgam with mercury.

Anode materials suitable for use in the process of the present invention (used as bulk or coating materials) include:
(1) *dimensionally stable anodes* for the evolution of oxygen (DSA™-O₂) of the type [M/MₓO_{y}-A_{z}Oₜ] comprising a metallic substrate or base metal M coated with mixed metal oxides (MMO) as electrocatalyst, wherein:
   **M** is a refractory metal or an alloy thereof with a valve action property; preferably selected from the group consisting of titanium, titanium alloy, zirconium, zirconium alloy, hafnium, hafnium alloy, vanadium, vanadium alloy, niobium, niobium alloy, tantalum and tantalum alloy;
   **MₓO_{y}** is a metallic oxide of a valve metal forming a thin and impervious layer protecting the metallic substrate or base metal; preferably selected from the group consisting of TiO₂, ZrO₂, HfO₂, NbO₂, Nb₂O₅, TaO₂, and Ta₂O₅; and
   **A_{z}Oₜ** is an electrocatalytic metal oxide of a noble metal, an oxide of the platinum group metals (PGMs) preferably selected from the group consisting of RuO₂, IrO₂ and PₜOₓ, or a metallic oxide preferably selected from the group consisting of SnO₂, Sb₂O₅, Bi₂O₃;
(2) *electronically conductive ceramics* such as sub-stoichiometric titanium oxides such as Magneli-Anderson phases with general formula TiₙO₂ₙ₋₁ (n is an integer ≥ 3);
(3) *conductive oxides* comprising a spinel structure AB₂O₄, wherein A is selected from the group consisting of Fe(II), Mn(II) and Ni(II); and B is selected from the group consisting of Al, Fe(III), Cr(III) and Co(III);
(4) *conductive oxides* comprising a perovskite structure ABO₃, wherein A is selected from the group consisting of Fe(II), Mn(II), Co(II) and Ni(II), and B is Ti(IV);
(5) *conductive oxides* comprising a pyrochlore structure AB₂O₇ wherein A is selected from the group consisting of Fe(II), Mn(II), Co(II) and Ni(II), and B is Ti(IV);
(6) *carbon-based materials,* preferably selected from the group consisting of graphite, impervious graphite and vitreous carbon; or
(7) lead or lead alloys preferably selected from the group consisting of pure lead (>99.94 wt.% Pb), lead-silver (0.25-0,80 wt.% Ag), lead-tin (5-10 wt.% Sn), lead-antimony alloy (4-6 wt.% Sb), and lead-tin antimony (1-2 wt.% Sb and 3 to 4 wt.% Sn).

The anolyte composition used in the process of the present invention advantageously comprises sulfuric acid. In an embodiment of the present invention, the anolyte composition comprises a sulfuric acid concentration ranging from about 10 to about 60 wt.% sulfuric acid. In a further embodiment of the present invention, the sulfuric acid concentration comprises about 30 wt.% sulfuric acid.

In an embodiment of the present invention involving a three-compartment electrolyzer, the catholyte composition ranges from about 1 to about 800 g/L of iron (II) sulfate heptahydrate. In a further embodiment of the present invention involving a three-compartment electrolyzer, the catholyte composition comprises about 600 g/L of iron (II) sulfate heptahydrate. In yet a further embodiment of the present invention involving a three-compartment electrolyzer, the pH of the catholyte is maintained between 2 to 6.0. In yet a further embodiment of the present invention involving a three-compartment electrolyzer, the pH of the catholyte is maintained between 2 to 4.

In an embodiment of the present invention involving a three-compartment electrolyzer, the electrolysis is conducted at a temperature ranging between about 20°C to about 80°C. In a further embodiment of the present invention involving a three-compartment electrolyzer, the electrolysis is conducted at a temperature ranging between about 30°C to about 70°C. In yet a further embodiment of the present invention involving a three-compartment electrolyzer, the electrolysis is conducted at a temperature of about 50°C.

In an embodiment of the present invention, the flow rate of both anolyte and catholyte ranges from about 0,1 to about 100 L/min, In yet a further embodiment of the present invention, the flow rate of both anolyte and catholyte ranges from about 0.1 to about 50 L/min. In yet a further embodiment of the present invention, the flow rate of both anolyte and catholyte is about 2 L/min.

In an embodiment of the present invention, the electrolysis is conducted at a current density ranging from about 50 to about 10000 A/m². Such a current density advantageously provides for a dendrite-free deposit of iron. Further is described that the electrolysis is conducted at a current density of about 2500 A/m²

Further is described that the electrolysis is conducted at a current density ranging from about 3000 to about 5000 A/m². Such a current density advantageously provides for the production of iron chips. In a further embodiment of the present invention, the electrolysis is conducted at a current density of about 4000 A/m².

Further is described that the electrolysis is conducted at a current density ranging from about 5000 to about 10000 A/m². Such a current density advantageously provides for the production of iron metal powder. Further is described that the electrolysis is conducted at a current density of about 7000 A/m².

The separators as used in the process of the present invention may be passive, such as conventional diaphragm separators or active, such as ion exchange membranes. In an embodiment of the present invention, the anion and cation exchange membranes comprise conventional membranes.

The interelectrode gap may also be varied, with a well-known impact on the ohmic drop. In an embodiment of the present invention, the interelectrode gap ranges from about 1mm to about 100 mm. In yet a further embodiment of the present invention, the interelectrode gap ranges from about 2 mm to about 50 mm. In yet a further embodiment of the present invention, the interelectrode gap ranges from about 3 mm to about 25 mm. In yet a further embodiment of the present invention, the interelectrode gap ranges from about 4 mm to about 10 mm.

The present invention is further illustrated below by way of the following non-limiting examples.

### EXAMPLE 1

**Preparation of an iron-rich metal sulfate solution and removal of traces of ferric cations.** A batch of iron (II) sulfate heptahydrate from a titanium pigment producer, also known as copperas, was used to prepare a synthetic solution. The material was dissolved in deionized and degassed water. After complete dissolution of the soluble salt, a sample was taken to measure the mass density, the total iron content and the concentration of ferric cations.

After determination of the ferric cations, the pH of the solution was adjusted by adding either iron (II) carbonate or sulfuric acid until the pH of the solution reached 3.5. At that pH, any traces of ferric iron precipitated as ferric hydroxide which was subsequently removed by filtration. The clear iron sulfate solution was then acidified to a pH of about 0.5 (at this pH, the air oxidation of ferrous iron (Fe²⁺) into ferric iron (Fe³⁺) is slowed down). A blanket of nitrogen gas was maintained above the solution further preventing any air oxidation. Small cm-sized polypropylene balls floating above the solution helped to prevent any important water loss by evaporation.

### EXAMPLE 2

**Example 2a - Electrolysis of the iron-rich metal sulfate solution at pH 1.4 and 50°C (comparative example).** The pH of the iron-rich metal sulfate solution of Example 1 was adjusted to 1.4 by adding minute amounts of iron (II) carbonate and then circulated inside the cathodic compartment of an electrolyzer. The electrolyzer consisted of a plate type electrolyzer (**Figure 5**) with two compartments separated by an anion- exchange membrane. The geometric electrode and membrane surface area was 929 cm² (square foot) and the spacing between each electrode and the separator was one inch (2.54 cm). The cathodic compartment was equipped with a cathode plate made of CP titanium (ASTM grade 2) supplied by RMI (Niles, OH). Prior to electrolysis, the cathode was chemically etched by immersing it into boiling oxalic acid (10 wt.% H₂C₂O₄) and then rinsed thoroughly with deionized water until no trace of acid remained. The anodic compartment was equipped with a dimensionally stable anode (DSA™-O₂) of the type TiR-200® supplied by Eltech Systems (Chardon, OH), composed of a plate of CP titanium (substrate) coated with a high loading of iridium dioxide (IrO₂) acting as electrocatalyst for promoting the evolution of oxygen (Ti/IrO₂).

The anolyte that circulated in the loop consisted of an aqueous solution of 30 wt.% sulfuric acid, the balance being deionised water. The electrolysis was performed galvanostatically at an overall current density of 700 A/m². The operating temperature was 50°C and the volume flow rate of both catholyte and anolyte was 2 L/min. At the current density used, the measured overall cell voltage was 3.25 V. During the electrolysis, pure iron metal deposited at the cathode, while sulfate anions migrated through the permeable anion exchange membrane toward the anodic compartment where water was oxidized as oxygen gas at the surface of the anode, concurrently producing hydronium cations. The electrochemical reactions involved are as follows:

2Fe²⁺(aq) + 4e⁻ → 2Fe⁰(s) (cathode, -)

2H₂O → O₂(g) + 4H⁺ + 4e⁻ (anode, +)

The overall reaction therefore being the production of iron metal at the cathode, and oxygen and sulfuric acid in the anodic compartment:

2FeSO₄ + 2H₂O → 2Fe(s) + 2H₂SO₄ + O₂(g)

After two hours of continuous electrolysis, the power was shut off and the electrolyzer was opened. The electrodeposited smooth, gray thin plate was easily stripped from the titanium cathode by mechanical means. The measured mass was 129 g. After performing an ultimate chemical analysis of the bulk sample, it was made up of 99.99 wt.% iron. The estimated faradaic current efficiency was 95% and the specific energy consumption at 700 A/m² was 3.47 kWh per kg of pure iron.

**Example 2b - Electrolysis of the iron-rich metal sulfate solution at pH 2.8 and 60°C.** The pH of the iron-rich metal sulfate of Example 1 was adjusted to 2.8 (to not favor the evolution of hydrogen gas) by adding iron (II) carbonate and then circulated inside the cathodic compartment of the electrolyzer described hereinabove in Example 2a. The operating temperature was 60°C. The electrolysis was performed galvanostatically at an overall current density of 1000 A/m². At the current density used, the measured overall cell voltage was 3.50 V. After two hours of continuous electrolysis, a bright, smooth electrodeposit was easily stripped from the titanium cathode by mechanical means. The measured mass was 190 g. After performing an ultimate chemical analysis of the sample, it was determined to be made up of 99.99 wt.% iron. The estimated faradaic current efficiency was 98% and the specific energy consumption at 1000 A/m² was 3.42 kWh per kg of pure iron.

**Example 2c - Electrolysis of the iron-rich metal sulfate solution at pH 3.5 and 25°C.** The pH of the iron-rich metal sulfate of Example 1 was adjusted to 3.5 (to not favor the evolution of hydrogen gas) by adding iron (II) carbonate and then circulated inside the cathodic compartment of the electrolyzer described hereinabove in Example 2a. The operating temperature was 25°C. The electrolysis was performed galvanostatically at an overall current density of 300 A/m². At the current density used, the measured overall cell voltage was 2.90 V. After two hours of continuous electrolysis, a bright, smooth electrodeposit was easily stripped from the titanium cathode by mechanical means. The measured mass was 55 g. After performing an ultimate chemical analysis of the sample, it was determined to be made up of 99.99 wt.% iron. The estimated faradaic current efficiency was 95% and the specific energy consumption at 300 A/m² was 2.93 kWh per kg of pure iron.

### EXAMPLE 3

**Electrolysis of the iron-rich metal sulfate solution using a three-compartment electrolyzer (comparative example).** The pH of the iron-rich metal sulfate of Example 1 was adjusted to 1.4 by adding iron (II) carbonate and then circulated inside the central compartment of the three-electrolyzer. The electrolyzer consisted of a plate type electrolyzer (**Figure 4**) with three compartments separated by an anion and a cation-exchange membrane. The geometric electrode and membrane surface area was 929 cm² (square foot) and the spacing between each electrode and the separator was one inch (2.54 cm). The spacing between each membrane was one inch (2.54 cm).

The cathodic compartment was equipped with a cathode plate made of CP titanium (ASTM grade 2) supplied by RMI (Niles, OH). Prior to electrolysis, the cathode was chemically etched by immersing it into boiling oxalic acid (10 wt.% H₂C₂O₄) and then rinsed thoroughly with deionized water until no trace of acid remained.

The anodic compartment was equipped with a dimensionally stable anode (DSA™-O₂) of the type TiR-2000® supplied by Eltech Systems (Chardon, OH), composed of a plate of CP titanium (substrate) coated with a high loading of iridium dioxide (IrO₂) acting as electrocatalyst for promoting the evolution of oxygen (Ti/IrO₂).

The catholyte that circulated in the loop within the cathodic compartment consisted of an aqueous solution of 600 g/L iron (II) sulfate heptahydrate at a pH of 1.4, while the anolyte that circulated in the loop within the anodic compartment consisted of an aqueous solution of 30 wt.% sulfuric acid, the balance being deionised water.

The electrolysis was performed galvanostatically at an overall current density of 1000 A/m². The operating temperature was 50°C and the volume flow rate of catholyte, anolyte and iron -rich solution was 2 L/min. At the current density used, the measured overall cell voltage was 3.90 V.

During the electrolysis, ferrous cations from the iron-rich metal sulfate solution crossed the cation exchange membrane and pure iron metal deposited at the cathode. Sulfate anions migrated through the permeable anion exchange membrane toward the anodic compartment where water was oxidized as oxygen gas at the surface of the anode concurrently producing hydronium cations.

After two hours of continuous electrolysis, the power was shut off and the electrolyzer was opened. The electrodeposited bright iron metal was easily stripped from the titanium cathode by mechanical means. The measured mass was 184 g. The estimated faradaic current efficiency was 95% and the specific energy consumption at 1000 A/m² was 3.94 kWh per kg of pure iron.

The results and characteristics of the electrolysis experiments conducted in Examples 2a (comparative example), 2b, 2c, and 3 (comparative example) are summarized hereinbelow in **Table 1.**

**Table 1: Results and Characteristics of Electrolysis Experiments**

| | **Example 2a** | **Example 2b** | **Example 2c** | **Example 3** |
|---|---|---|---|---|
| pH of the Catholyte (25°C) | 1.4 | 2.8 | 3.5 | 1.4 |
| Temperature of the Catholyte (°C) | 50 | 60 | 25 | 50 |
| Electrolyzer Design (# compartments) | 2 | 2 | 2 | 3 |
| Cathodic Current Density (A/m²) | 700 | 1000 | 300 | 1000 |
| Cell Voltage (U_{cell}/V) | 3.25 | 3.50 | 2.90 | 3.80 |
| faradaic Current Efficiency (%) | 95 | 98 | 95 | 95 |
| Iron Specific Energy Consumption (kWh/kg) | 3.470 | 3.420 | 2.930 | 3.800 |

It is to be understood that the invention is not limited in its application to the details of construction and parts as described hereinabove. The invention is capable of other embodiments and of being practiced in various ways. It is also understood that the phraseology or terminology used herein is for the purpose of description and not limitation.

### REFERENCES

**1.** Fisher, F. Process for the manufacture of ductile electrolytic iron - US patent 992,951 issued on May 23, 1911.
**2.** Cleaves, H. E.; and Thompson, J. G. The Metal Iron. Part 1 - Preparation of High Purity Iron, Chapter 1 and 2, pages 3-60. Alloys of Iron Research Monograph Series, McGraw-Hill, New York (1935).
**3.** Burges, C. F. Trans American Electroplaters Society 5,201 (1904).
**4.** Cowper-Coles. S. O. An improved process for the production of iron by electrodeposition - British Patent 191028226 (Issued December 5, 1910)
**5.** Mostad, E., Rolseth, S. and Thonstad, J. Electrowinning of iron from sulphate solutions. Hydrometallurgy, 90(2-4) 213-220 (2008).
**6.** Lahitte, C; Hita, A.; Schneider, H.. Durand, G.; Pareau, D. and Stambouli, M. Regeneration by liquid-liquid extraction of acids from aqueous solutions containing metals (WO 02081779A2).
**7.** Cardarelli, F. Materials Handbook: a Concise Desktop Reference. Second Edition. Springer London, New York, pages 556-590 (2008).

The results and characteristics of the electrolysis experiments conducted in Examples 2a, 2b, 2c, and 3 are summarized hereinbelow in **Table 1.**

**Table 1: Results and Characteristics of Electrolysis Experiments**

| | **Example 2a** | **Example 2b** | **Example 2c** | **Example 3** |
|---|---|---|---|---|
| pH of the Catholyte (25°C) | 1.4 | 2.8 | 3.5 | 1.4 |
| Temperature of the Catholyte (°C) | 50 | 60 | 25 | 50 |
| Electrolyzer Design (# compartments) | 2 | 2 | 2 | 3 |
| Cathodic Current Density (A/m²) | 700 | 1000 | 300 | 1000 |
| Cell Voltage (U_{cell}/V) | 3.25 | 3.50 | 2.90 | 3.80 |
| Faradaic Current Efficiency (%) | 95 | 98 | 95 | 95 |
| Iron Specific Energy Consumption (kWh/kg) | 3.470 | 3.420 | 2.930 | 3.800 |

It is to be understood that the invention is not limited in its application to the details of construction and parts as described hereinabove. The invention is capable of other embodiments and of being practiced in various ways. It is also understood that the phraseology or terminology used herein is for the purpose of description and not limitation.

### REFERENCES

**1.** Fisher, F. Process for the manufacture of ductile electrolytic iron - US patent 992,951 issued on May 23, 1911.
**2.** Cleaves, H. E.; and Thompson, J. G. The Metal Iron. Part 1 - Preparation of High Purity Iron, Chapter 1 and 2, pages 3-60. Alloys of Iron Research Monograph Series, McGraw-Hill, New York (1935).
**3.** Burges, C. F. Trans American Electroplaters Society 5, 201 (1904).
**4.** Cowper-Coles, S. O. An improved process for the production of iron by electrodeposition - British Patent 191028226 (Issued December 5, 1910)
**5.** Mostad, E., Rolseth, S. and Thonstad, J. Electrowinning of iron from sulphate solutions. Hydrometallurgy, 90(2-4) 213-220 (2008).
**6.** Lahitte, C.; Hita, A.; Schneider, H.; Durand, G.; Pareau, D. and Stambouli, M. Regeneration by liquid-liquid extraction of acids from aqueous solutions containing metals (WO 02081779A2).
**7.** Cardarelli, F. Materials Handbook: a Concise Desktop Reference. Second Edition. Springer London, New York, pages 556-590 (2008).

## Claims

1. An electrochemical process for the recovery of metallic iron or an iron-rich alloy, oxygen and sulfuric acid from an iron-rich metal sulfate solution, said process comprises:
a) providing an iron-rich metal sulfate solution;
b) electrolyzing said iron-rich metal sulfate solution in an electrolyzer comprising a cathodic compartment equipped with a cathode having a hydrogen over-potential equal or higher than that of iron and containing a catholyte having a pH ranging from 2 to 6; an anodic compartment equipped with an anode and containing an anolyte; and a separator allowing for anion passage; and
c) recovering electrodeposited iron or iron-rich alloy, sulfuric acid and oxygen gas;
wherein:
electrolyzing said iron-rich metal sulfate solution causes iron or an iron-rich alloy to be electrodeposited at the cathode, nascent oxygen gas to evolve at the anode, sulfuric acid to accumulate in said anodic compartment and an iron depleted solution to be produced.

2. The electrochemical process of claim **1,** wherein step a) includes leaching an iron rich feedstock to produce a slurry; and subjecting said slurry to a separation step to provide the iron-rich metal sulfate solution.

3. The electrochemical process of claim **1,** wherein the iron-depleted solution is replenished with fresh iron-rich metal sulfate solution and recirculated.

4. The electrochemical process of claim **1,** further comprising the step of etching the cathode prior to the electrolyzing step.

5. The electrochemical process of claim **1,** wherein the pH of the catholyte is adjusted to a pH ranging from 2 to 4.

6. The electrochemical process of claim **1,** wherein the cathode has an over-voltage at 200 A.m⁻² of greater than about 466 mV in 0.5 mol.dm⁻³ H₂SO₄ solution at 25°C and an over-voltage at 1000 A.m⁻² of greater than about 800 mV in 1.0 mol.dm⁻³ H₂SO₄ solution at 25°C.

7. The electrochemical process of claim **1,** wherein the cathode comprises a material or is coated with a material selected from the group consisting of nickel, nickel alloy, iron, iron alloy, titanium, titanium alloy, zirconium, zirconium alloy, zinc, zinc alloy, cadmium, cadmium alloy, tin, tin alloy, copper, copper alloy, lead, lead alloy, niobium, niobium alloy, gold, gold alloy, mercury and a metallic amalgam including mercury, preferably titanium or titanium alloy, and more preferably a titanium palladium alloy.

8. The electrochemical process of claim **4,** wherein the etching step comprises treating the cathode with an acid, preferably selected from the group consisting of oxalic acid and a mixture of fluoro and nitric acid.

9. The electrochemical process of claim **1,** wherein the anolyte comprises a sulfuric acid solution, which preferably comprises a concentration ranging from 5 to 60 wt.%, and more preferably comprises a concentration of 30 wt.%.

10. The electrochemical process of claim 9, wherein the anolyte circulates in a loop within the anodic compartment.

11. The electrochemical process of claim **1,** wherein the iron-rich metal sulfate solution acting as the catholyte circulates in a loop within the cathodic compartment.

12. The electrochemical process of claim **1,** wherein the anode is a dimensionally stable anode either comprising
i) a material of the formula M/MₓO_{y}-A_{z}Oₜ, wherein:
a) M is a refractory metal or an alloy with a valve action property, preferably selected from the group consisting of titanium, titanium alloy, zirconium, zirconium alloy, hafnium, hafnium alloy, vanadium, vanadium alloy, niobium, niobium alloy, tantalum and tantalum alloy;
b) MₓO_{y} is a metallic oxide of a valve metal, preferably selected from the group consisting of TiO₂, ZrO₂, HfO₂, NbO₂, Nb₂O₅, TaO₂, and Ta₂O₅; and
c) A_{z}Oₜ is an electrocatalytic metal oxide of a noble metal, an oxide of the platinum group metals, preferably selected from the group consisting of RuO₂, IrO₂ and PₜOₓ, or a metallic oxide, preferably selected from the group consisting of SnO₂, Sb₂O₅ or Bi_{z}O₃;
ii) an electronically conductive ceramic material, preferably comprising titanium oxides having the general formula TiₙO₂ₙ₋₁, wherein n is an integer equal to or higher than 3;
iii) a conductive oxide having a spinel structure AB₂O₄, wherein
a) A is selected from the group consisting of Fe(II), Mn(II) and Ni(II);and
b) B is selected from the group consisting of Al, Fe(III), Cr(III) and Co(III);
iv) a conductive oxide having a perovskite structure ABO₃, wherein
a) A is selected from the group consisting of Fe(II), Mn(II), Co(II) and Ni(II); and
b) B is Ti(IV);
v) a conductive oxide having a pyrochlore structure AB₂O₇, wherein
a) A is selected from the group consisting of Fe(II), Mn(II), Co(II) and Ni(II); and
b) B is Ti(IV);
vi) a carbon based material, preferably selected from the group consisting of graphite, impervious graphite and vitreous carbon; or
vii) a lead or lead alloy, preferably selected from the group consisting of lead-silver alloys, lead-tin alloys, lead-antimony alloys, and lead-tin antimony alloys.

13. The electrochemical process of claim **12,** wherein the metallic oxide of a valve metal forms a thin impervious protective layer over the refractory metal or the alloy of the refractory metal.

14. The electrochemical process of claim **1,** wherein step b) is performed in a two-compartment electrolyser comprising an ion exchange membrane, preferably an anion-exchange membrane, separating the anodic compartment from the cathodic compartment.

15. The electrochemical process of claim **1,** wherein step b) is performed in a three-compartment electrolyser comprising a central compartment disposed between the anodic compartment and the cathodic compartment and wherein an ion exchange membrane separates the anodic and cathodic compartments from the central compartment, preferably wherein an anion exchange membrane separates the anodic compartment from the central compartment and wherein a cation exchange membrane separates the cathodic compartment from the central compartment.

16. The electrochemical process of claim 15, wherein the iron-rich metal sulfate solution is circulated within the central compartment.

17. The electrochemical process of claim **15,** wherein the catholyte circulates in a loop within the cathodic compartment.

18. The electrochemical process of claim 17, wherein the catholyte comprises an iron (II) sulfate heptahydrate solution, preferably an iron (II) sulfate heptahydrate solution having a concentration ranging from 1 to 800 g/L, more preferably an iron (II) sulfate heptahydrate solution having a concentration of 600 g/L.

19. The electrochemical process of any one of claims **10, 11,** or **17,** wherein the anolyte or catholyte comprises a flow rate ranging from 0.1 L/min to 100 L/min, preferably from 0.1 L/min to 30 L/min, more preferably is 2 L/min.

20. The electrochemical process of claim **1,** wherein step b) is performed under constant current and at a current density ranging from 50 to 10000 A/m².

21. The electrochemical process of claim **1,** wherein step b) is performed at a temperature ranging from 20 to 100°C, preferably from 30°C to 70°C, and more preferably is 50°C.

22. The electrochemical process of claim **1,** wherein the recovered nascent oxygen gas is further dried and liquefied.

23. The electrochemical process of claim **1,** wherein the recovered sulfuric acid is concentrated and/or recirculated.

## Patentansprüche

1. Elektrochemischer Prozess zur Rückgewinnung von metallischem Eisen oder einer eisenreichen Legierung, Sauerstoff und Schwefelsäure aus einer eisenreichen Metallsulfatlösung, wobei der Prozess umfasst:
a) Bereitstellen einer eisenreichen Metallsulfatlösung;
b) Elektrolysieren der eisenreichen Metallsulfatlösung in einem Elektrolyseur, der eine kathodische Kammer, die mit einer Kathode mit einem Wasserstoffüberpotential ausgestattet ist, das gleich oder höher als das von Eisen ist, und einen Katholyten mit einem von 2 bis 6 reichenden pH enthält; eine anodische Kammer, die mit einer Anode ausgestattet ist und einen Anolyten enthält; und einen Separator umfasst, der für einen Anionendurchtritt sorgt; und
c) Rückgewinnen von galvanisch abgeschiedenem Eisen oder galvanisch abgeschiedener eisenreicher Legierung, Schwefelsäure und Sauerstoffgas;
wobei:
das Elektrolysieren der eisenreichen Metallsulfatlösung bewirkt, dass Eisen oder eine eisenreiche Legierung an der Kathode galvanisch abgeschieden wird, aufkommendes Sauerstoffgas an der Anode entsteht, sich Schwefelsäure in der anodischen Kammer ansammelt und eine eisenarme Lösung hergestellt wird.

2. Elektrochemischer Prozess nach Anspruch 1, wobei Schritt a) umfasst, ein eisenreiches Ausgangsmaterial auszulaugen, um einen Schlamm herzustellen; und den Schlamm einem Separationsschritt zu unterziehen, um die eisenreiche Metallsulfatlösung bereitzustellen.

3. Elektrochemischer Prozess nach Anspruch 1, wobei die eisenarme Lösung mit frischer eisenreicher Metallsulfatlösung aufgefüllt und wieder rückgeführt wird.

4. Elektrochemischer Prozess nach Anspruch 1, darüber hinaus den Schritt umfassend, die Kathode vor dem Elektrolysierschritt zu ätzen.

5. Elektrochemischer Prozess nach Anspruch 1, wobei der pH des Katholyten auf einen von 2 bis 4 reichenden pH eingestellt wird.

6. Elektrochemischer Prozess nach Anspruch 1, wobei die Kathode eine Überspannung bei 200 A.m⁻² von mehr als ca. 466 mV in 0,5 mol.dm⁻³ H₂SO₄-Lösung bei 25°C und eine Überspannung bei 1000 A.m⁻² von mehr als ca. 800 mV in 1,0 mol.dm⁻³ H₂SO₄-Lösung bei 25°C hat.

7. Elektrochemischer Prozess nach Anspruch 1, wobei die Kathode ein Material umfasst oder mit einem Material beschichtet ist, das aus der Gruppe ausgewählt ist, die aus Nickel, Nickellegierung, Eisen, Eisenlegierung, Titan, Titanlegierung, Zirkonium, Zirkoniumlegierung, Zink, Zinklegierung, Cadmium, Cadmiumlegierung, Zinn, Zinnlegierung, Kupfer, Kupferlegierung, Blei, Bleilegierung, Niob, Nioblegierung, Gold, Goldlegierung, Quecksilber und einem metallischem Amalgam, das Quecksilber enthält, vorzugsweise Titan oder Titanlegierung und bevorzugter einer Titan-Palladium-Legierung besteht.

8. Elektrochemischer Prozess nach Anspruch 4, wobei der Ätzschritt umfasst, die Kathode mit einer Säure zu behandeln, die vorzugsweise aus der Gruppe ausgewählt ist, die aus Oxalsäure und einem Gemisch aus Fluor- und Salpetersäure besteht.

9. Elektrochemischer Prozess nach Anspruch 1, wobei der Anolyt eine Schwefelsäurelösung umfasst, die vorzugsweise eine von 5 bis 60 Gew.-% reichende Konzentration hat, und bevorzugter eine Konzentration von 30 Gew.-% hat.

10. Elektrochemischer Prozess nach Anspruch 9, wobei der Anolyt in einer Schleife in der Anodenkammer zirkuliert.

11. Elektrochemischer Prozess nach Anspruch 1, wobei die eisenreiche Metallsulfatlösung, die als Katholyt wirkt, in einer Schleife in der Kathodenkammer zirkuliert.

12. Elektrochemischer Prozess nach Anspruch 1, wobei es sich bei der Anode um eine formstabile Anode handelt, die entweder umfasst
i) ein Material der Formel M/MₓO_{y}-A_{z}Oₜ, wobei:
a) M ein feuerfestes Metall oder eine Legierung mit einer Ventilwirkungseigenschaft ist, das bzw. die vorzugsweise aus der Gruppe ausgewählt ist, die aus Titan, Titanlegierung, Zirkonium, Zirkoniumlegierung, Hafnium, Hafniumlegierung, Vanadium, Vanadiumlegierung, Niob, Nioblegierung, Tantal und Tantallegierung besteht;
b) MₓO_{y} ein Metalloxid eines Ventilmetalls ist, das vorzugsweise aus der Gruppe ausgewählt ist, die aus TiO₂, ZrO₂, HfO₂, NbO₂, Nb₂O₅, TaO₂ und Ta₂O₅ besteht; und
c) A_{z}Oₜ ein elektroktalytisches Metalloxid eines Edelmetalls, ein Oxid der Platingruppemetalle, das vorzugsweise aus der Gruppe ausgewählt ist, die aus RuO₂, IrO₂ und PₜOₓ besteht, oder ein Metalloxid ist, das vorzugsweise aus der Gruppe ausgewählt ist, die aus SnO₂, Sb₂O₅ oder Bi₂O₃ besteht;
(ii) ein elektronisch leitfähiges Keramikmaterial, das vorzugsweise Titanoxide mit der allgemeinen Formel TiₙO₂ₙ₋₁ umfasst, wobei n eine ganze Zahl gleich oder höher als 3 ist;
(iii) ein leitfähiges Oxid mit einer Spinellstruktur AB₂O₄, wobei
a) A aus der Gruppe ausgewählt ist, die aus FE(II), Mn(II) und Ni(II) besteht; und
b) B aus der Gruppe ausgewählt ist, die aus Al, FE(III), Cr(III) und Co(III) besteht;
(iv) ein leitfähiges Oxid mit einer Perovskitstruktur ABO₃, wobei
a) A aus der Gruppe ausgewählt ist, die aus FE(II), Mn(II), Co(II) und Ni(II) besteht; und
b) B Ti(IV) ist;
(v) ein leitfähiges Oxid mit einer Pyrochlorstruktur AB₂O₇, wobei
a) A aus der Gruppe ausgewählt ist, die aus FE(II), Mn(II), Co(II) und Ni(II) besteht; und
b) B Ti(IV) ist;
(vi) ein Material auf Kohlenstoffbasis, das vorzugsweise aus der Gruppe ausgewählt ist, die aus Graphit, undurchlässigem Graphit und durchsichtigem Graphit besteht; oder
(vii) ein Blei oder eine Bleilegierung, die vorzugsweise aus der Gruppe ausgewählt ist, die aus Blei-Silber-Legierungen, Blei-Zinn-Legierungen, Blei-Antimon-Legierungen und Blei-Zinn-Antimon-Legierungen besteht.

13. Elektrochemischer Prozess nach Anspruch 12, wobei das Metalloxid eines Ventilmetalls eine dünne, undurchlässige Schutzschicht über dem feuerfesten Metall oder der Legierung aus dem feuerfesten Metall bildet.

14. Elektrochemischer Prozess nach Anspruch 1, wobei Schritt b) in einem Zweikammern-Elektrolyseur erfolgt, der eine Ionenaustauschmembran, vorzugsweise eine Anionenaustauschmembran umfasst, welche die anodische Kammer von der kathodischen Kammer trennt.

15. Elektrochemischer Prozess nach Anspruch 1, wobei Schritt b) in einem Dreikammern-Elektrolyseur erfolgt, der eine zentrale Kammer umfasst, die zwischen der anodischen Kammer und der kathodischen Kammer angeordnet ist, und wobei eine Ionenaustauschmembran die anodische und kathodische Kammer von der zentralen Kammer trennt, wobei vorzugsweise eine Anionenaustauschmembran die anodische Kammer von der zentralen Kammer trennt, und wobei eine Kationenaustauschmembran die kathodische Kammer von der zentralen Kammer trennt.

16. Elektrochemischer Prozess nach Anspruch 15, wobei die eisenreiche Metallsulfatlösung in der zentralen Kammer zirkuliert.

17. Elektrochemischer Prozess nach Anspruch 15, wobei der Katholyt in einer Schleife in der kathodischen Kammer zirkuliert.

18. Elektrochemischer Prozess nach Anspruch 17, wobei der Katholyt eine Eisen(II)sulfat-Heptahydratlösung, vorzugsweise eine Eisen(II)sulfat-Heptahydratlösung mit einer von 1 bis 800 g/l reichenden Konzentration, bevorzugter eine Eisen(II)sulfat-Heptahydratlösung mit einer Konzentration von 600 g/l umfasst.

19. Elektrochemischer Prozess einem der Ansprüche 10, 11 oder 17, wobei der Anolyt oder Katholyt eine Durchflussrate umfasst, die von 0,1 l/min bis 100 l/m, vorzugsweise von 0,1 l/min bis 30 l/min reicht, bevorzugter 2 l/min beträgt.

20. Elektrochemischer Prozess nach Anspruch 1, wobei Schritt b) unter konstantem Strom und bei einer von 50 bis 10000 A/m² reichenden Stromdichte erfolgt.

21. Elektrochemischer Prozess nach Anspruch 1, wobei Schritt b) bei einer Temperatur erfolgt, die von 20 bis 100°C, vorzugsweise von 30°C bis 70°C reicht und bevorzugter 50°C beträgt.

22. Elektrochemischer Prozess nach Anspruch 1, wobei das rückgewonnene aufkommende Sauerstoffgas darüber hinaus getrocknet und verflüssigt wird.

23. Elektrochemischer Prozess nach Anspruch 1, wobei die rückgewonnene Schwefelsäure konzentriert und/oder wieder rückgeführt wird.

## Revendications

1. Procédé électrochimique de récupération de fer métallique ou d'un alliage riche en fer, d'oxygène et d'acide sulfurique à partir d'une solution de sulfates métalliques riche en fer, ledit procédé comprenant :
a) la fourniture d'une solution de sulfates métalliques riche en fer ;
b) l'électrolyse de ladite solution de sulfates métalliques riche en fer dans un électrolyseur comprenant un compartiment cathodique muni d'une cathode ayant un surpotentiel d'hydrogène égal ou supérieur à celui du fer et contenant un catholyte dont le pH est compris entre 2 et 6 ; un compartiment anodique muni d'une anode et contenant un anolyte ; et un séparateur permettant le passage d'anions ; et
c) la récupération de fer ou d'alliage riche en fer déposé électrolytiquement, d'acide sulfurique et de gaz oxygène ;
sachant que :
l'électrolyse de ladite solution de sulfates métalliques riche en fer entraîne le dépôt électrolytique de fer ou d'un alliage riche en fer au niveau de la cathode, l'émission de gaz oxygène naissant au niveau de l'anode, l'accumulation d'acide sulfurique dans ledit compartiment anodique et la production d'une solution appauvrie en fer.

2. Le procédé électrochimique de la revendication 1, sachant que l'étape a) inclut la lixiviation d'une charge d'alimentation riche en fer pour produire une boue ; et le fait de soumettre ladite boue à une étape de séparation pour fournir la solution de sulfates métalliques riche en fer.

3. Le procédé électrochimique de la revendication 1, sachant que la solution appauvrie en fer est réalimentée en solution de sulfates métalliques riche en fer neuve et remise en circulation.

4. Le procédé électrochimique de la revendication 1, comprenant en outre l'étape d'attaque chimique de la cathode avant l'étape d'électrolyse.

5. Le procédé électrochimique de la revendication 1, sachant que le pH du catholyte est réglé à un pH compris entre 2 et 4.

6. Le procédé électrochimique de la revendication 1, sachant que la cathode a une surtension à 200 A.m⁻² supérieure à environ 466 mV dans 0,5 mol.dm⁻³ de solution de H₂SO₄ à 25°C et une surtension à 1.000 A.m⁻² supérieure à environ 800 mV dans 1,0 mol.dm⁻³ de solution de H₂SO₄ à 25°C.

7. Le procédé électrochimique de la revendication 1, sachant que la cathode comprend un matériau ou est revêtue d'un matériau sélectionné dans le groupe constitué par le nickel, l'alliage de nickel, le fer, l'alliage de fer, le titane, l'alliage de titane, le zirconium, l'alliage de zirconium, le zinc, l'alliage de zinc, le cadmium, l'alliage de cadmium, l'étain, l'alliage d'étain, le cuivre, l'alliage de cuivre, le plomb, l'alliage de plomb, le niobium, l'alliage de niobium, l'or, l'alliage d'or, le mercure et un amalgame métallique incluant du mercure, de préférence du titane ou un alliage de titane, et de façon plus préférentielle un alliage de titane-palladium.

8. Le procédé électrochimique de la revendication 4, sachant que l'étape d'attaque chimique comprend le traitement de la cathode avec un acide, de préférence sélectionné dans le groupe constitué par l'acide oxalique et un mélange de fluoroacide et d'acide nitrique.

9. Le procédé électrochimique de la revendication 1, sachant que l'anolyte comprend une solution d'acide sulfurique, qui comprend de préférence une concentration allant de 5 à 60 % en poids, et de façon plus préférentielle une concentration de 30 % en poids.

10. Le procédé électrochimique de la revendication 9, sachant que l'anolyte circule en boucle à l'intérieur du compartiment anodique.

11. Le procédé électrochimique de la revendication 1, sachant que la solution de sulfates métalliques riche en fer agissant en tant que le catholyte circule en boucle à l'intérieur du compartiment cathodique.

12. Le procédé électrochimique de la revendication 1, sachant que l'anode est une anode dimensionnellement stable comprenant l'un ou l'autre de
i) un matériau de la formule M/MₓO_{y}-A_{z}Oₜ, sachant que :
a) M est un métal réfractaire ou un alliage doté d'une propriété d'actionnement de soupape, de préférence sélectionné dans le groupe constitué par le titane, l'alliage de titane, le zirconium, l'alliage de zirconium, l'hafnium, l'alliage d'hafnium, le vanadium, l'alliage de vanadium, le niobium, l'alliage de niobium, le tantale et l'alliage de tantale ;
b) MₓO_{y} est un oxyde métallique d'un métal de soupape, de préférence sélectionné dans le groupe constitué par TiO₂, ZrO₂, HfO₂, NbO₂, Nb₂O₅, TaO₂, et Ta₂O₅ ; et
c) A_{z}Oₜ est un oxyde de métal électrocatalytique d'un métal noble, un oxyde des métaux du groupe platine, de préférence sélectionné dans le groupe constitué par RuO₂, IrO₂ et PₜOₓ, ou un oxyde métallique, de préférence sélectionné dans le groupe constitué par SnO₂, Sb₂O₅ ou Bi₂O₃ ;
ii) un matériau céramique électroniquement conducteur, de préférence comprenant des oxydes de titane ayant la formule générale TiₙO₂ₙ₋₁, sachant que n est un entier égal ou supérieur à 3 ;
iii) un oxyde conducteur ayant une structure de spinelle AB₂O₄, sachant que
a) A est sélectionné dans le groupe constitué par Fe(II), Mn(II) et Ni(II) ; et
b) B est sélectionné dans le groupe constitué par Al, Fe(III), Cr(III) et Co(III) ;
iv) un oxyde conducteur ayant une structure de pérovskite ABO₃, sachant que
a) A est sélectionné dans le groupe constitué par Fe(II), Mn(II), Co(II) et Ni(II) ; et
b) B est Ti(IV) ;
v) un oxyde conducteur ayant une structure de pyrochlore AB₂O₇, sachant que
a) A est sélectionné dans le groupe constitué par Fe(II), Mn(II), Co(II) et Ni(II) ; et
b) B est Ti(IV) ;
vi) un matériau à base de carbone, de préférence sélectionné dans le groupe constitué par le graphite, le graphite imperméable ou le carbone vitreux ; ou
vii) un plomb ou un alliage de plomb, de préférence sélectionné dans le groupe constitué par les alliages de plomb-argent, les alliages de plomb-étain, les alliages de plomb-antimoine, et les alliages de plomb-étain-antimoine.

13. Le procédé électrochimique de la revendication 12, sachant que l'oxyde métallique d'un métal de soupape forme une fine couche protectrice imperméable sur le métal réfractaire ou l'alliage du métal réfractaire.

14. Le procédé électrochimique de la revendication 1, sachant que l'étape b) est effectuée dans un électrolyseur à deux compartiments comprenant une membrane à échange d'ions, de préférence une membrane à échange d'anions, séparant le compartiment anodique du compartiment cathodique.

15. Le procédé électrochimique de la revendication 1, sachant que l'étape b) est effectuée dans un électrolyseur à trois compartiments comprenant un compartiment central disposé entre le compartiment anodique et le compartiment cathodique et sachant qu'une membrane à échange d'ions sépare les compartiments anodique et cathodique du compartiment central, de préférence sachant qu'une membrane à échange d'anions sépare le compartiment anodique du compartiment central et sachant qu'une membrane à échange de cations sépare le compartiment cathodique du compartiment central.

16. Le procédé électrochimique de la revendication 15, sachant que la solution de sulfates métalliques riche en fer est mise en circulation à l'intérieur du compartiment central.

17. Le procédé électrochimique de la revendication 15, sachant que le catholyte circule en boucle à l'intérieur du compartiment cathodique.

18. Le procédé électrochimique de la revendication 17, sachant que le catholyte comprend une solution d'heptahydrate de sulfate de fer (II), de préférence une solution d'heptahydrate de sulfate de fer (II) ayant une concentration allant de 1 à 800 g/L, de façon plus préférentielle une solution d'heptahydrate de sulfate de fer (II) ayant une concentration de 600 g/L.

19. Le procédé électrochimique de l'une quelconque des revendications 10, 11, ou 17, sachant que l'anolyte ou le catholyte présentent un débit allant de 0,1 L/mn à 100 L/mn, de préférence de 0,1 L/mn à 30 L/mn, de façon plus préférentielle de 2 L/mn.

20. Le procédé électrochimique de la revendication 1, sachant que l'étape b) est effectuée sous courant constant et à une densité de courant allant de 50 à 10.000 A/m².

21. Le procédé électrochimique de la revendication 1, sachant que l'étape b) est effectuée à une température allant de 20 à 100°C, de préférence de 30°C à 70°C, et de façon plus préférentielle de 50°C.

22. Le procédé électrochimique de la revendication 1, sachant que le gaz oxygène naissant récupéré est en outre séché et liquéfié.

23. Le procédé électrochimique de la revendication 1, sachant que l'acide sulfurique récupéré est concentré et/ou remis en circulation.
